# EUROPÄISCHE PATENTSCHRIFT

(11) **EP 3 234 736 B1**
(45) Veröffentlichungstag und Bekanntmachung des Hinweises auf die Patenterteilung: **27.02.2019**
(21) Anmeldenummer: 15813792.7
(22) Anmeldetag: 16.12.2015
(51) Int. Cl.: G06F 3/01, G06F 3/03, B60K 35/00, B60K 37/04

(54) **VERFAHREN ZUM BETREIBEN EINER EINGABEVORRICHTUNG, EINGABEVORRICHTUNG, KRAFTFAHRZEUG**
METHOD FOR OPERATING AN INPUT DEVICE, INPUT DEVICE, MOTOR VEHICLE
DISPOSITIF POUR FAIRE FONCTIONNER UN DISPOSITIF DE SAISIE, DISPOSITIF DE SAISIE, VÉHICULE AUTOMOBILE

(30) Priorität: 19.12.2014 DE 102014226546
(43) Veröffentlichungstag der Anmeldung: 25.10.2017
(73) Patentinhaber: Robert Bosch GmbH, 70442 Stuttgart (DE)
(72) Erfinder: KNIEP, Stefan Andreas, 31134 Hildesheim (DE); LANGENBERG, Markus, 30559 Hannover (DE); DREUW, Philippe, 31188 Heersum (DE); ZAUM, Daniel, 31157 Sarstedt (DE); HEIMSOTH, Jens, 31137 Hildesheim (DE); DE BOER, Gerrit, 31137 Hildesheim (DE)
(86) Internationale Anmeldenummer: PCT/EP2015/079921
(87) Internationale Veröffentlichungsnummer: WO 2016/096940

(56) Entgegenhaltungen:
- EP-A2- 2 733 598
- WO-A2-2014/009561
- DE-A1-102013 211 046
- US-A1- 2014 123 077

## Beschreibung

Die Erfindung betrifft ein Verfahren zum Betreiben einer Eingabevorrichtung, insbesondere eines Kraftfahrzeugs, die wenigstens einen Sensor zum berührungsfreien Erfassen einer Position und/oder Positionsänderung mindestens eines Fingers einer Hand eines Benutzers aufweist, wobei in Abhängigkeit von einer erfassten Position und/oder Positionsänderung auf eine Eingabe erkannt und diese ausgeführt wird.

Ferner betrifft die Erfindung eine entsprechende Eingabevorrichtung mit einem berührungsfrei arbeitenden Sensor, sowie ein Kraftfahrzeug.

### Stand der Technik

Bei heutigen Kraftfahrzeugen werden Bedienkonzepte eingesetzt, bei denen eine Eingabevorrichtung und eine Anzeigevorrichtung nah beieinander angeordnet sind. Üblicherweise werden hierzu sogenannte berührungsempfindliche Bildschirme und sogenannte Touchscreens vorgesehen, bei denen Bedienung und Anzeige an der gleichen Stelle erfolgen. Häufig werden

Anzeigevorrichtungen im oberen Bereich einer Bedienkonsole oder eines Armaturenbretts des Kraftfahrzeugs angebracht, damit der Fahrer zum Ablesen seinen Blick nicht zu stark von dem Verkehrsgeschehen abwenden muss.

In anderen Fahrzeugen befinden sich ein Touchpad, also ein berührungsempfindlicher Sensor, im Bereich der Armauflage des Fahrers, und die Anzeigevorrichtung an gewohnter Stelle im Bereich des Armaturenbretts.

Eine visuelle Rückmeldung an den Fahrer bei der Bedienung des Sensors kann dabei in Form von einer angedeuteten durchsichtigen Hand, die durch die Anzeigevorrichtung dargestellt wird, erfolgen. Dadurch kann der Fahrer bequem die Eingabevorrichtung betätigen, während ihm die Anzeige weiterhin in einem vorteilhaften Blickwinkel präsentiert wird. In diesem Fall ist es auch denkbar, die Anzeigevorrichtung nicht als Bildschirm, sondern als Head-Up-Display auszubilden. Während klassische berührungsempfindliche Sensoren beziehungsweise Touchpads eine Berührung durch den Benutzer zu ihrer Bedienung benötigen, sind auch Eingabevorrichtungen bekannt, die berührungsfrei Eingaben erkennen beziehungsweise registrieren. Dabei werden beispielsweise mithilfe von Tiefensensoren die Positionen von Hand, Fingern und/oder Arm eines Benutzers im Raum erkannt und für eine Gestikbedienung ausgewertet. Für Fingergesten ist eine hohe Auflösung erforderlich, die mit Sensoren, wie beispielsweise Time-of-Flight-Sensoren, mit Stereokameras, strukturiertem Licht oder ähnlichem erreicht werden kann. Für Hand- oder Körpergesten können auch Sensoren mit einer geringeren Auflösung eingesetzt werden, wie beispielsweise Radarsensoren. Durch einen oder mehrere Sensoren wird also die Position oder Positionsänderung der Hand eines Benutzers erfasst, wobei in Abhängigkeit der erfassten Position und/oder Positionsänderung auf eine Eingabe erkannt und diese durchgeführt wird. Der Benutzer zeigt somit mit einer Bewegung seiner Hand beziehungsweise mit zumindest einem Finger seiner Hand der Eingabevorrichtung an, welche Eingabe er vornehmen möchte. Die Eingabevorrichtung erkennt anhand der Fingerbewegung die gewünschte Eingabe und führt diese aus, indem sie den durch die Bewegung vorgegebenen Befehl umsetzt und beispielsweise einen Betriebsparameter des Kraftfahrzeugs verändert. So kann beispielsweise in Abhängigkeit von der Position und Positionsänderung eines Fingers des Benutzers auf die Eingabe "Lautstärke erhöhen" erkannt und von der Eingabevorrichtung ausgeführt werden, indem sie die Lautstärke, beispielsweise eines Unterhaltungssystems des Kraftfahrzeugs, erhöht.

Beispielsweise ist aus DE102013211046A1 eine Eingabevorrichtung für ein Fahrzeug zum berührungsfreien Erfassen von Fingern einer Hand eines Benutzers für eine Eingabe bekannt. US 2014/0123077 A1, EP 2 733 598 A2 und WO 2014/009561 A2 offenbaren weitere berührungslose Eingabevorrichtungen.

### Offenbarung der Erfindung

Die Erfindung ist im Verfahrensanspruch 1, im Eingabevorrichtungsanspruch 7 und im Kraftfahrzeugsanspruch 8 definiert.

Das erfindungsgemäße Verfahren mit den Merkmalen des Anspruchs 1 hat den Vorteil, dass der Benutzer durch eine einfache Geste eine gewünschte Funktion besonders schnell aufrufen kann. Dem Benutzer wird durch das erfindungsgemäße Verfahren eine "Shortcut" Geste zur Verfügung gestellt, mittels welcher er schnell und gezielt eine bestimmte Funktion durch die Eingabevorrichtung auslösen kann. So ist es ihm beispielsweise möglich, durch das Durchführen der Shortcut-Geste ein Radio stumm zu schalten, ein Telefonat zu beenden oder eine Zielführung eines Navigationssystems oder die akustischen Hinweise einer Zielführung abzubrechen. Erfindungsgemäß ist hierzu vorgesehen, dass auf die Eingabe erkannt wird, wenn zwei Fingerspitzen erfasst werden, die sich zunächst berühren und dann voneinander entfernen, wobei sich ihre Bewegungsbahnen kreuzen. Die Shortcut-Geste wird also dann erkannt, wenn der Benutzer im Erfassungsbereich des Sensors mit zwei seiner Fingerspitzen Positionsänderungen durchführt, die erkennen lassen, dass sich die Fingerspitzen berühren und anschließend voneinander entfernen, und zwar derart, dass sich zumindest ausgehend von der Berührung ihre Bewegungsbahnen kreuzen. Wenn sich die beiden Fingerspitzen berühren, liegen die Schwerpunkte der Finger noch beabstandet zueinander. Damit sich ihre Bewegungsbahnen nach der Berührung kreuzen, müssen die Fingerspitzen aneinander vorbeigeführt werden. Eine derartige Bewegung findet insbesondere dann statt, wenn der Benutzer im Erfassungsbereich des Sensors mit seinen Fingern schnipst und die Hand dabei derart ausgerichtet ist, dass die Schnipsbewegung, nämlich das Berühren und das anschließende voneinander Entfernen mit kreuzenden Bewegungsbahnen durch den Sensor, insbesondere Kamerasensor, erfassbar ist. Durch ein einfaches Schnipsen kann der Benutzer somit eine Eingabe mittels der Eingabevorrichtung auf einfache Art und Weise vornehmen. Der Eingabe ist dann eine vorbestimmte Funktion, wie beispielsweise das zuvor bereits genannte Stummschalten zugeordnet. Besonders bevorzugt ist der Eingabe in Abhängigkeit von einem Kontext eine unterschiedliche Funktion zugeordnet. Ist beispielsweise das Radio eingeschaltet, führt das Erkennen der Shortcut-Geste zum Stummschalten des Radios. Ist hingegen eine Zielführung eines Navigationsystems des Kraftfahrzeugs aktiviert und ein Radio abgeschaltet, wird bei Erfassen der Shortcut-Geste beispielsweise die Zielführung abgebrochen.

Erfindungsgemäß ist vorgesehen, dass auf die Eingabe erkannt wird, wenn die Geschwindigkeit, mit welcher sich die Fingerspitzen voneinander entfernen, größer ist als die Geschwindigkeit der Fingerspitzen vor der Berührung. Auf die Shortcut-Geste wird also dann erkannt, wenn die Berührung der Fingerspitzen im Erfassungsbereich des Kamerasensors herbeigeführt wird. Dabei bewegen sich die Fingerspitzen aufeinander zu, bis sie sich berühren. Die Geschwindigkeit der Bewegung aufeinander zu wird dann mit der Geschwindigkeit verglichen, mit welcher sich die Finger voneinander entfernen. Ist die Entfernungsgeschwindigkeit größer als die zur Berührung führende Bewegungsgeschwindigkeit, wird auf die Eingabe erkannt. Sind die Geschwindigkeiten gleich groß oder ist die Geschwindigkeit bei der Entfernung der Fingerspitzen voneinander größer als bei der Bewegung zur Berührung der Fingerspitzen, so wird die Bewegung nicht als die vorgegebene Bewegung erkannt und insofern die Eingabe nicht erkannt und auch nicht ausgeführt. Dadurch wird vermieden, dass eine Fehlbedienung der Eingabevorrichtung erfolgt, wenn der Benutzer beispielsweise einen Finger im Erfassungsbereich des Sensors an dem Daumen vorbeiführt, ohne jedoch zu schnipsen.

Weiterhin ist bevorzugt vorgesehen, dass auf eine Berührung der Fingerspitzen nur dann erkannt wird, wenn sich die relative Bewegungsgeschwindigkeit der Fingerspitzen zueinander insbesondere abrupt verringert, bevor sich die Bewegungsbahnen kreuzen. Durch diese Ausführungsform wird gewährleistet, dass ein Auftreffen der Fingerspitzen aufeinander sicher erkannt wird. Die abrupte Verringerung der relativen Bewegungsgeschwindigkeit weist darauf hin, dass die Finger aufeinander getroffen sind und sich insofern gegenseitig abbremsen.

Weiterhin ist bevorzugt vorgesehen, dass auf eine Berührung der Fingerspitzen nur dann erkannt wird, wenn sich die relative Bewegungsgeschwindigkeit der Fingerspitzen, bevor sich die Bewegungsbahnen kreuzen, auf Null verringert. Somit wird auf die Berührung der Fingerspitzen nur dann erkannt, wenn diese tatsächlich aufeinander treffen und dadurch die Bewegung abgestoppt wird. Weiterhin ist bevorzugt vorgesehen, dass die Eingabevorrichtung wenigstens einen akustischen Sensor, insbesondere wenigstens ein Mikrophon, aufweist, und auf die Eingabe nur dann erkennt, wenn zusätzlich zu der Positionsänderung der Fingerspitzen ein Klatsch- oder Schnipsgeräusch erfasst wird. Die durch den erstgenannten Sensor erfasste Positionsänderung der Fingerspitzen wird somit durch eine akustische Überwachung verifiziert. Dadurch kann sichergestellt werden, dass der Fahrer tatsächlich schnipst. Die Erkennung der Schnipsgeste wird dadurch vereinfacht, wobei beispielsweise auf ein Berücksichtigen einer verringerten Geschwindigkeit bei der Berührung der Fingerspitzen verzichtet werden kann. Wobei die akustische Verifizierung selbstverständlich nur dann funktioniert, wenn das Schnips-Geräusch lauter als die Umgebungsgeräusche, insbesondere in dem Kraftfahrzeug ist. Insofern wird die Überwachung der Positionsänderungen, wie sie in den vorhergehenden Ausführungsformen beschrieben sind, bevorzugt auch weiterhin ausgeführt.

Gemäß einer vorteilhaften Weiterbildung der Erfindung ist vorgesehen, dass das Klatsch- oder Schnips-Geräusch in Abhängigkeit einer Frequenz, einer Lautstärke und/oder einer Dauer eines erfassten Geräuschs erkannt wird. Aus den von dem akustischen Sensor erfassten Geräuschen wird somit das Klatsch- oder Schnips-Geräusch in Abhängigkeit von einer Frequenz, Lautstärke und/oder Dauer herausgefiltert und erkannt.

Vorzugsweise wird auf das Klatsch- oder Schnips-Geräusch dann erkannt, wenn die Lautstärke eine vorgebbare Mindestlautstärke überschreitet und/oder wenn die Dauer eine vorgebbare Maximaldauer unterschreitet. Hierdurch ist eine einfache und schnelle Erkennung des Klatsch- und/oder Schnips-Geräuschs möglich. Ein genaues Analysieren eines Frequenzmusters, das von dem akustischen Sensor erfasst wird, ist nicht unbedingt notwendig, weil das Geräusch lediglich zur Verifizierung der Schnips-Geste hinzugezogen wird. Dabei wird vorzugsweise die zeitliche Nähe der erfassten Geste mit dem erfassten Geräusch berücksichtig, um sicher zu stellen, dass das erfasste Geräusch zu der Geste gehört, beziehungsweise durch diese ausgelöst wurde.

Die erfindungsgemäße Eingabevorrichtung mit den Merkmalen des Anspruchs 7 zeichnet sich dadurch aus, dass sie das erfindungsgemäße Verfahren durchführt. Hierdurch ergeben sich die bereits genannten Vorteile. Weitere Merkmale und Vorteile ergeben sich aus dem zuvor Beschriebenen sowie aus den Ansprüchen.

Das erfindungsgemäße Kraftfahrzeug, wie in Anspruch 8 definiert, zeichnet sich durch die erfindungsgemäße Eingabevorrichtung auf, wobei sich hier die bereits genannten Vorteile für einen Benutzer des Kraftfahrzeugs ergeben. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: einen Innenraum eines Kraftfahrzeugs mit einer vorteilhaften Eingabevorrichtung und
- Figur 2: eine Schnips-Geste zur Bedienung der Eingabevorrichtung in einer vereinfachten Darstellung.

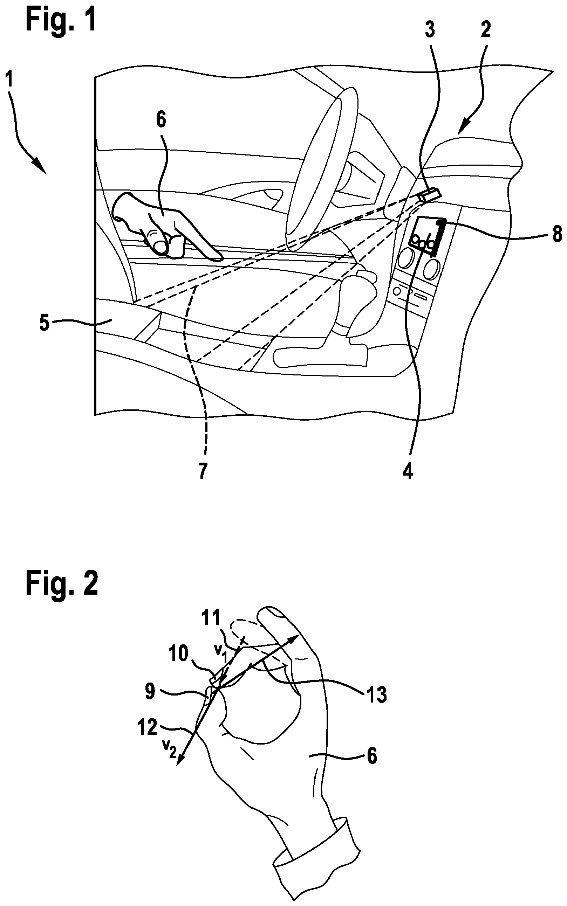

Figur 1 zeigt eine schematische Darstellung des Innenraums eines hier nicht näher dargestellten Kraftfahrzeugs 1, welches eine Eingabevorrichtung 2 zum berührungslosen Eingeben von Steuerbefehlen aufweist. Die Eingabevorrichtung 2 weist hierzu einen berührungsfrei arbeitenden Sensor 3 sowie eine Anzeigeeinheit 4 auf. Die Anzeigeeinheit 4 ist in das Armaturenbrett beziehungsweise in die Bedienkonsole des Kraftfahrzeugs 1 eingebracht angeordnet. Die Anzeigeeinheit 4 ist als Bildschirm, insbesondere Display, ausgebildet und kann beispielsweise Bestandteil eines Navigationssystems oder eines Entertainmentsystems des Kraftfahrzeugs 1 sein. Auch ist es denkbar, die Anzeigeeinheit 4 alternativ oder zusätzlich als Head-Up-Display (HUD) auszubilden. Der berührungsfrei arbeitende Sensor 3 ist als zweidimensional arbeitende Videokamera beziehungsweise Kameraeinrichtung ausgebildet, die den mit gestrichelten Linien 7 dargestellten Erfassungsbereich aufweist. Die Videokamera ist dabei bevorzugt derart ausgerichtet, dass sie auf das frontseitige Ende einer mittleren Armauflage 5 des Kraftfahrzeugs 1 weist. Die Armauflage 5 weist selbst keine reale Eingabeoberfläche auf, auf welcher ein Fahrer mittels einer hier nur schematisch dargestellten Hand 6 durch Berührung der Eingabeoberfläche einen Befehl eingeben könnte.

Die Eingabevorrichtung 2 ist stattdessen dazu ausgebildet, eine Position und/oder Positionsänderung zumindest eines Fingers der Hand 6 im Raum zu erfassen und in Abhängigkeit davon auf eine Eingabe zu erkennen und diese auszuführen.

Weiterhin weist die Eingabevorrichtung 2 einen akustischen Sensor 8 auf, mittels dessen Geräusche im Innenraum des Kraftfahrzeugs 1 überwacht und erfasst werden.

Die Eingabevorrichtung 2 ist dazu ausgebildet, in Abhängigkeit von einer Position und/oder Positionsänderung zumindest eines Fingers der Hand 6 des Benutzers eine Eingabe zu erkennen und diese auszuführen, um beispielsweise bei Erkennen auf die gewünschte Eingabe ein Radio oder andere akustische Ereignisse im Kraftfahrzeug 1 stumm zu schalten. Dabei ist vorgesehen, dass auf die Eingabe dann erkannt wird, wenn durch die Eingabevorrichtung 2 erfasst wird, dass der Benutzer mit seiner Hand 6 schnipst. Dabei wird folgendermaßen vorgegangen:
Der Benutzer muss zunächst seine Hand 6 in den Erfassungsbereich des Sensors 3 einführen, sodass die Hand 6 von dem Sensor 3 optisch erfasst wird. Figur 2 zeigt hierzu in einem Ausführungsbeispiel das von dem Kamerasensor 3 erfasste Bild mit der im Erfassungsbereich des Sensors 3 befindlichen Hand 6.

Mittels der Eingabevorrichtung 2 beziehungsweise mittels des Sensors 3 und einer Auswertung der von dem Sensor 3 erfassten Bilder werden die Fingerspitzen 9 und 10 von Daumen und Mittelfinger der Hand 6 erfasst und deren Bewegungsbahn/Trajektorie nachverfolgt. Dabei wird die Bewegung der Fingerspitzen 9, 10 darauf überwacht, ob sich diese zunächst berühren und dann voneinander entfernen, wobei sich ihre Bewegungsbahnen kreuzen. In Figur 2 ist dies vereinfacht dargestellt, durch einen gestrichelten Mittelfinger als Ausgangsposition und einen Mittelfinger mit durchgezogenen Linien in der Position, in welcher sich die Fingerspitzen 9, 10 von Daumen und Mittelfinger berühren. Dabei sind außerdem Bewegungspfeile eingezeichnet, anhand derer die Bewegung der Finger erläutert werden soll. Ein erster, gestrichelter Bewegungspfeil 11 zeigt die Bewegungsrichtung des Mittelfingers 11 in Richtung auf den Daumen zu. Der Finger wird dabei üblicherweise mit einer ersten Geschwindigkeit v₁ bewegt, bis er auf den Daumen 9 trifft. In dem Moment ist eine relative Geschwindigkeit zwischen Daumen und Finger gleich Null. Anschließend wird bei der Schnipsbewegung der Mittelfinger in dem vorliegenden Ausführungsbeispiel unter dem Daumen vorbeigezogen, wie durch einen Pfeil 12 gezeigt. Dabei bewegt sich die Fingerspitze 10 mit einer zweiten Geschwindigkeit v₂ weiter, bis sie auf die Handinnenfläche trifft und dort das übliche Schnips-Geräusch bei ausreichender Bewegungsgeschwindigkeit verursacht. Die Bewegungsbahn der Fingerspitze 9 des Daumens ist durch einen weiteren Pfeil 13 angezeigt. Die Bewegungsbahnen der Fingerspitzen 9, 10, kreuzen sich nachdem sich die Fingerspitzen 9, 10 berührt haben.

Die Eingabevorrichtung 2 überwacht mittels des Sensors 3, ob die zuvor beschriebenen Positionsänderungen der Fingerspitzen 9, 10 erfasst werden. Dazu wird geprüft, ob sich die Fingerspitzen zunächst mit einer ersten Geschwindigkeit v₁ aufeinander zubewegen, dann einander berühren und anschließend sich wieder voneinander entfernen, wobei sich hier Bewegungsbahnen gemäß Pfeile 13 und 12 kreuzen. Dabei wird das Berühren der Fingerspitzen 9, 10 dadurch erkannt, dass die relative Geschwindigkeit der Fingerspitzen 9, 10 zueinander im Berührungspunkt gleich Null oder nahezu gleich Null ist. In jedem Fall wird geprüft, ob die Geschwindigkeit v₁ kleiner ist als die Geschwindigkeit v₂. Ist dies der Fall, so wird darauf erkannt, dass die Fingerspitzen 9, 10 sich berührt haben und eine Schnipsbewegung durchgeführt wird. Insofern wird die Schnips-Geste dann erkannt, wenn sich die Finger zunächst berühren und sich dann mit höherer Geschwindigkeit voneinander entfernen, wobei sich ihre Bewegungsbahnen kreuzen.

Mittels des akustischen Sensors 8, der insbesondere als Mikrophon ausgebildet ist und beispielsweise auch Teile einer Freisprechanlage des Kraftfahrzeugs 1 sein kann, wird die Schnips-Geste akustisch verifiziert. Dazu werden bei der Durchführung der Schnips-Geste auftretende Geräusche darauf überwacht, ob sie eine vorgebbare Lautstärke überschreiten und eine vorgebbare Maximaldauer unterschreiten. Gegebenenfalls wird auch der Frequenzgang überwacht und ausgewertet, um das Schnips- oder Klatschgeräusch zu identifizieren. Wird durch diese Prüfung ein Schnips-Geräusch festgestellt, das zeitlich mit der optisch erfassten Schnips-Geste übereinstimmt, so wird sicher darauf erkannt, dass der Benutzer im Erfassungsbereich des Sensors 3 mit der Hand 6 geschnipst hat. In Folge dessen wird die gewünschte Eingabe, insbesondere das Stummschalten der Unterhaltungseinrichtung, insbesondere des Radios, durch die Eingabevorrichtung 2 durchgeführt.

Durch die Fusion der unterschiedlichen Signalquellen des Sensors 3 und des Akustiksensors 8 ist es nun möglich, die Auftretungswahrscheinlichkeit des zu erkennenden Ereignisses als bedingte Wahrscheinlichkeit aufzufassen, wobei von beiden Sensoren die Schnips-Geste detektiert werden muss, um auf das zu erkennenden Ereignis zu schließen. Dadurch lässt sich eine quantitative Aussage zur Erkennungsgenauigkeit treffen und eine Unsicherheit gegenüber der Erkennung mit nur einem Sensor 3 oder 8 reduzieren. Die Ermittlung der beschriebenen Fingerspitzenbewegung soll im Folgenden im Detail erläutert werden:

Zunächst erfolgt eine Hintergrundmodellierung nach Zivkovic, Zoran (Zivkovic, Zoran; "Improved Adaptive Gaussian Mixture Model for Background Substration", ICPR, 2004) des durch den Sensor 3 erfassten Bildes. Dadurch werden der Hintergrund und der Vordergrund voneinander getrennt. Als Hintergrund wird dabei das statische beziehungsweise sich nicht verändernde von dem Sensor 3 erfasste Bild in dem Kraftfahrzeug verstanden. Das statische Bild dient als Referenzbild, dass zu jedem Zeitpunkt einer Bildfolge von einem aktuell erfassten Bild abgezogen wird, so dass nur Bildelemente beziehungsweise Pixel im resultierenden Differenzbild markiert sind, die sich vom vorher definierten/ erfassten statischen Hintergrundbild unterscheiden. Der Vordergrund ist die im Erfassungsbereich des Sensors 3 bewegte Hand 6 eines Benutzers, wie sie in Figur 1 beispielhaft dargestellt ist.

Alternativ oder zusätzlich zu der Hintergrundmodellierung ist vorgesehen, dass eine Vordergrundmodellierung nach Dadgostar und Sarrafzadeh (Dadgostar, Farhad und Sarrafzadeh, Abdolhossein: "An adaptive real-time skin detector based on Hue thresholding: A comparison on two motion tracking methods" Pattern Recognition Letters, 2006, 1342-1352) durchgeführt wird, bei welcher relevante Vordergrundregionen für die Handerkennung durch spezielle Hautfarbmodelle erfasst werden, wobei aufgrund des Farbunterschieds zwischen der Hand und dem Hintergrund die Hand erkannt wird.

Auf Basis der der durch die Vordergrund- und/oder Hinterdgrundmodellierung gewonnenen Daten wird eine Handkontur der Hand 6 ermittelt und insbesondere auch der Handkonturschwerpunkt berechnet. Vorteilhafterweise wird dazu eine Handkontursegmentierung nach Suzuki und Abe (Suzuki, S. und Abe, K.: Topological Structural Analysis of Digitized Binary Images by Border Following." CVGIP, 1985, 32-46) durchgeführt. Anschließend werden Fingerspitzen der Hand 6 und damit einzelne Finger erkannt. Dies erfolgt vorzugsweise in Abhängigkeit von den erfassten Krümmungen der Handkontur, wie beispielsweise bei Malik (Malik, Shahzad: "Real-time Hand Tracking and Finger Tracking for Interaction", Toronto: CSC2503F Project Report, University of Toronto, 2003) beschrieben wurde. Alternativ kann auch eine Handmodellierung, wie sie von Liu und Lovell (Liu, Nianjun and Lovell, Brian C. "Hand Gesture Extraction by Active Shape Models", Proceedings of the Digital Image Computing on Techniques and Applications, 2005) beschrieben wurde durchgeführt werden, um sowohl die Hand als auch ihre Finger- und Fingerspitzen zu detektieren (Lee, J. und Kunii, T. L.: "Model-Based Analysis of Hand Posture", IEEE Computer Graphics and Applications, 1995, 77-86). Auf Basis der so bestimmten Fingerspitzen 9, 10 werden erneut geschlossene Konturen, berechnet, wobei deren Schwerpunktzentren die Position der finalen Fingerspitze repräsentieren. Falls mehrere falsche Fingerspitzen durch eine Übersegmentierung detektiert wurden, werden diese anhand von geometrischen Heuristiken und des Abstands zum Handkonturschwerpunkt verworfen. Hierdurch lassen sich auf einfache Art und Weise einzelne Fingerspitzen der Hand 6 ermitteln.

Sowohl die gesamte Hand 6 als auch deren Fingerspitzen 9, 10 können mit bekannten Trackingverfahren, wie sie beispielsweise von Do, Asfour und Dillmann (Do, Martin; Asfour, Tamim; and Dillmann, Rüdiger: "Particle Filter-Based Fingertip Tracking with Circular Hough Transform Features" MVA, 2011) beschrieben wurden, verfolgt werden. Die Erkennung statischer Zeigegesten kann durch standartisierte Klassifikationsverfahren und unabhängig zu jedem Bild einer Sequenz erfolgen, wie von Lockton und Fitzgibbon (Lockton, R. und Fitzgibbon, A. W.: "Real-time gesture recognition using deterministic boosting", BMVC, 2002) oder Nagi (Nagi, Jawad et al. "Max-Pooling Convolutional Neural Networks for Vision-based Hand Gesture Recognition" ICSIPA, 2011, 342-347) beschrieben. Probabilistische Sequenzmodellierungsverfahren erlauben sowohl die Erkennung einfacher statischer (Dreuw, Philippe; Keysers, Daniel; Deselaers, Thomas und Ney, Hermann: "Gesture Recognition Using Image Comparision Methods", International Workshop on Gesture in Human-Computer Interaction and Simulation, 2005, 124-128) als auch komplexer dynamischer Handgesten (Dreuw, Philippe; Rybach, David; Deselaers, Thomas; Zahedi, Morteza und Ney, Hermann. "Speech Recognition Techniques for a Sign Language Recogntion System", Interspeech, Antwerp, Belgium, 2007, 2513-2516), die nicht notwendigerweise eine bereits segmentierte Handkontur als Eingabe erwarten, sondern mittels erscheinungsbasierter Merkmale auf dem gesamten Bild arbeiten. Ähnliche Verfahren, die auch angewendet können, basieren auf einer Analyse des optischen Flusses (Cutler, R. und Turk, M.: "View-Based Interpretation on Real-Time Optical Flow for Gesture Recognition", IEEE International Conference on Automatic Face and Gesture Recognition, Nara, Japan, 1998).

## Patentansprüche

1. Verfahren zum Betreiben einer Eingabevorrichtung (2), insbesondere eines Kraftfahrzeugs (1), die wenigstens einen Kamerasensor (3) zum berührungsfreien Erfassen einer Position und/oder Positionsänderung mindestens eines Fingers einer Hand (6) eines Benutzers aufweist, wobei die Eingabevorrichtung (2) in Abhängigkeit von einer erfassten Position und/oder Positionsänderung eine Eingabe erkennt und diese ausführt, wobei zwei Fingerspitzen erfasst werden, **dadurch gekennzeichnet, dass** von der Eingabevorrichtung (2) eine Schnipsgeste als Eingabe erkannt wird, wenn die Fingerspitzen (9,10) erfasst werden, die sich zunächst mit einer ersten Geschwindigkeit aufeinander zubewegen, dann einander berühren und anschließend sich wieder voneinander entfernen, wobei sich ihre Bewegungsbahnen kreuzen, wobei die Geschwindigkeit, mit welcher sich die Fingerspitzen (9,10) voneinander entfernen, größer ist als die erste Geschwindigkeit der Fingerspitzen (9,10) vor der Berührung, und wobei das Berühren der Fingerspitzen (9,10) dadurch erkannt wird, dass die relative Geschwindigkeit der Fingerspitzen (9,10) zueinander im Berührungspunkt gleich Null oder nahezu gleich Null ist.

2. Verfahren nach einem der vorhergehenden Ansprüche, **dadurch gekennzeichnet, dass** eine Berührung der Fingerspitzen (9,10) nur dann erkannt wird, wenn sich die relative Bewegungsgeschwindigkeit der Fingerspitzen (9,10) zueinander verringert, bevor sich die Bewegungsbahnen kreuzen.

3. Verfahren nach einem der vorhergehenden Ansprüche, **dadurch gekennzeichnet, dass** eine Berührung der Fingerspitzen (9,10) nur dann erkannt wird, wenn sich die relative Bewegungsgeschwindigkeit der Fingerspitzen (9,19) zueinander, bevor sich die Bewegungsbahnen kreuzen, auf Null verringert.

4. Verfahren nach einem der vorhergehenden Ansprüche, **dadurch gekennzeichnet, dass** die Eingabevorrichtung (2) wenigstens einen akustischen Sensor (8), insbesondere Mikrophon, aufweist, und die Eingabe nur dann erkennt, wenn mittels des akustischen Sensor (8) ein Klatsch- oder Schnips-Geräusch erfasst wird.

5. Verfahren nach einem der vorhergehenden Ansprüche, **dadurch gekennzeichnet, dass** das Klatsch- oder Schnipsgeräusch in Abhängigkeit einer Frequenz, einer Lautstärke und/oder einer Dauer eines erfassten Geräuschs erkannt wird.

6. Verfahren nach einem der vorhergehenden Ansprüche, **dadurch gekennzeichnet, dass** das Klatsch- oder Schnipsgeräusch dann erkannt wird, wenn die Lautstärke eine vorgebbare Mindestlautstärke überschreitet und/oder wenn die Dauer eine vorgegebene Maximaldauer unterschreitet.

7. Eingabevorrichtung (2) für ein Fahrzeug, insbesondere Kraftfahrzeug (1), mit mindestens einem Kamerasensor (3) zum berührungsfreien Erfassen einer Position und/oder Positionsänderung mindestens eines Fingers einer Hand (6) eines Benutzers, wobei die Eingabevorrichtung (2) in Abhängigkeit von einer erfassten Position und/oder Positionsänderung eine Eingabe erkennt und diese ausführt, wobei zwei Fingerspitzen erfasst werden, **dadurch gekennzeichnet, dass** die Eingabevorrichtung (2) das Verfahren nach einem oder mehreren der Ansprüche 1 bis 6 durchführt.

8. Kraftfahrzeug (1) mit einer Eingabevorrichtung (2) nach Anspruch 7.

## Claims

1. Method for operating an input device (2), in particular of a motor vehicle (1), which input device has at least one camera sensor (3) for the contactless detection of a position and/or change in position of at least one finger of a hand (6) of a user, wherein the input device (2) identifies and executes an input in a manner dependent on a detected position and/or change in position, wherein two fingertips are detected, **characterized in that** a finger-click gesture is identified as an input by the input device (2) if the two fingertips (9, 10) are detected which firstly move towards one another with a first speed, then make contact with one another and subsequently move away from one another again, wherein their movement paths intersect, wherein the speed with which the fingertips (9, 10) move away from one another is greater than the first speed of the fingertips (9, 10) prior to the contact, and wherein the contact of the fingertips (9, 10) is identified by the relative speed of the fingertips (9, 10) with respect to one another being equal to zero or approximately equal to zero at the contact point.

2. Method according to any of the preceding claims, **characterized in that** contact of the fingertips (9, 10) is identified only if the relative movement speed of the fingertips (9, 10) with respect to one another decreases before the movement paths intersect.

3. Method according to any of the preceding claims, **characterized in that** contact of the fingertips (9, 10) is identified only if the relative movement speed of the fingertips (9, 19) with respect to one another decreases to zero before the movement paths intersect.

4. Method according to any of the preceding claims, **characterized in that** the input device (2) has at least one acoustic sensor (8), in particular microphone, and identifies the input only if a clap or finger-click noise is detected by means of the acoustic sensor (8).

5. Method according to any of the preceding claims, **characterized in that** the clap or finger-click noise is identified in a manner dependent on a frequency, a volume and/or a duration of a detected noise.

6. Method according to any of the preceding claims, **characterized in that** the clap or finger-click noise is detected if the volume exceeds a predefinable minimum volume and/or if the duration falls below a predefined maximum duration.

7. Input device (2) for a vehicle, in particular motor vehicle (1), having at least one camera sensor (3) for the contactless detection of a position and/or change in position of at least one finger of a hand (6) of a user, wherein the input device (2) identifies and executes an input in a manner dependent on a detected position and/or change in position, wherein two fingertips are detected, **characterized in that** the input device (2) carries out the method according to one or more of Claims 1 to 6.

8. Motor vehicle (1) having an input device (2) according to Claim 7.

## Revendications

1. Procédé pour faire fonctionner un dispositif de saisie (2), notamment d'un véhicule à moteur (1), qui possède au moins un capteur à caméra (3) pour la détection sans contact d'une position et/ou d'un changement de position d'au moins un doigt d'une main (6) d'un utilisateur, dans lequel le dispositif de saisie (2) reconnaît une saisie en fonction d'une position et/ou d'un changement de position détecté et exécute celle-ci, dans lequel deux pointes de doigt sont détectées, **caractérisé en ce que** le dispositif de saisie (2) reconnaît un geste de cliquetis en tant que saisie lors de la détection du fait que les deux pointes de doigt (9, 10) se rapprochent l'une de l'autre à une première vitesse, puis se touchent et se séparent l'une de l'autre, dans lequel leurs trajectoires de déplacement se croisent, dans lequel la vitesse à laquelle les pointes de doigt (9, 10) s'éloignent l'une de l'autre est supérieure à la première vitesse des pointes de doigt (9, 10) avant le contact, et dans lequel le contact des pointes de doigt (9, 10) est reconnu par le fait que la vitesse relative des pointes de doigt (9, 10) l'une par rapport à l'autre est égale à nulle ou pratiquement nulle au niveau du point de contact.

2. Procédé selon l'une des revendications précédentes, **caractérisé en ce qu'**un contact des pointes de doigt (9, 10) n'est reconnu que lorsque la vitesse de déplacement relative des pointes de doigt (9, 10) l'une par rapport à l'autre diminue avant que les trajectoires de déplacement ne se croisent.

3. Procédé selon l'une des revendications précédentes, **caractérisé en ce qu'**un contact des pointes de doigt (9, 10) n'est reconnu que lorsque la vitesse de déplacement relative des pointes de doigt (9, 19) l'une par rapport à l'autre se réduit à zéro avant que les trajectoires de déplacement ne se croisent.

4. Procédé selon l'une des revendications précédentes, **caractérisé en ce que** le dispositif de saisie (2) possède au moins un capteur acoustique (8), notamment un microphone, et ne détecte la saisie que si un bruit de claquement ou de cliquetis est détecté par l'intermédiaire du capteur acoustique (8).

5. Procédé selon l'une des revendications précédentes, **caractérisé en ce que** le bruit de claquement ou de cliquetis est reconnu en fonction d'une fréquence, d'un volume et/ou d'une durée d'un bruit détecté.

6. Procédé selon l'une des revendications précédentes, **caractérisé en ce que** le bruit de claquement ou de cliquetis est reconnu lorsque le volume dépasse un volume minimal prédéfinissable et/ou lorsque la durée s'abaisse en-dessous d'une durée maximale prédéfinie.

7. Dispositif de saisie (2) pour véhicule, en particulier pour véhicule à moteur (1), comportant au moins un capteur à caméra (3) pour la détection sans contact d'une position et/ou d'un changement de position d'au moins un doigt d'une main (6) d'un utilisateur, dans lequel le dispositif de saisie (2) reconnaît une saisie en fonction d'une position et/ou d'un changement de position détecté et exécute celle-ci, dans lequel deux pointes de doigt sont détectées,
**caractérisé en ce que** le dispositif de saisie (2) met en oeuvre le procédé selon l'une ou plusieurs des revendications 1 à 6.

8. Véhicule à moteur (1) comportant un dispositif de saisie (2) selon la revendication 7.
